# EUROPÄISCHE PATENTSCHRIFT

(11) **EP 1 387 138 B1**
(45) Veröffentlichungstag und Bekanntmachung des Hinweises auf die Patenterteilung: **15.11.2006**
(21) Anmeldenummer: 02017199.7
(22) Anmeldetag: 31.07.2002
(51) Int. Cl.: F27D 17/00, F27D 23/00, C21C 5/40

(54) **Schliessring**
Seal ring
Joint annulaire

(43) Veröffentlichungstag der Anmeldung: 04.02.2004
(73) Patentinhaber: OSCHATZ GMBH, 45143 Essen (DE)
(72) Erfinder: Spangardt, Günter, 46244 Bottrop-Kirchhellen (DE)
(74) Vertreter: Rohmann, Michael

(56) Entgegenhaltungen:
- DE-A- 2 815 274
- DE-A- 3 530 838
- DE-A- 3 722 948
- US-A- 3 814 402
- PATENT ABSTRACTS OF JAPAN vol. 010, no. 144 (C-349), 27. Mai 1986 (1986-05-27) & JP 61 003820 A (SHIN NIPPON SEITETSU KK;OTHERS: 01), 9. Januar 1986 (1986-01-09)

## Beschreibung

Die Erfindung betrifft einen Schließring zwischen einem Ofen, insbesondere einem Konverter, und einer mit Abstand über diesem angeordneten Kaminhaube, wobei der Oberrand des Schließringes einen Abstand von der Kaminhaube aufweist und mit der Kaminhaube einen Ringspalt bildet. - Mit dem Begriff Ofen ist insbesondere ein Industrieofen gemeint. Es liegt im Rahmen der Erfindung, dass der Schließring höhenverstellbar eingerichtet ist.

Schließringe der eingangs genannten Art sollen in ihrer abgesenkten Stellung eine störungsfreie Überführung des Primärgases aus dem Ofen bzw. aus dem Konverter in die Kaminhaube und den daran angeschlossenen Kamin gewährleisten. Dabei soll weder Primärgas nach außen, noch Falschluft nach innen gelangen. Dieser optimale Zustand ist jedoch nicht ohne weiteres erzielbar, weil insbesondere zwischen dem Oberrand des Schließringes und der Kaminhaube wechselweise Überdruckimpulse und Unterdruckimpulse auftreten. Es ist auch nicht möglich, den Ringspalt zwischen dem Oberrand des Schließringes und der Kaminhaube unbegrenzt klein zu wählen, da es in diesem Fall infolge des unvermeidbaren mechanischen Kontaktes, vor allem bei der Höhenverstellung des Schließringes, zu Beschädigungen des Schließringes und/oder der Kaminhaube kommen kann.

Ein Schließring der eingangs genannten Art ist aus DE 31 06 791 C2 bekannt. Dieser Schließring ist im Bereich seines Oberrandes mit einer Einrichtung zur Zuführung eines den Ringspalt abdichtenden, gas- und/oder dampfförmigen Sperrmediums ausgerüstet. Vorzugsweise besteht diese Einrichtung zur Zuführung des Sperrmediums aus einem Kranz von gleichsinnig zur Kaminhaube gerichteten Düsen. Der Schließring besteht aus ringförmigen Kühlrohren und zweckmäßigerweise ist die Einrichtung zur Zuführung des Sperrmediums zwischen zwei benachbarten Kühlrohren angeordnet. Der bekannte Schließring hat sich grundsätzlich bewährt. Nichtsdestoweniger sind die Maßnahmen zur Abdichtung des Ringspaltes verhältnismäßig aufwendig und deshalb verbesserungsfähig.

Der Erfindung liegt das technische Problem zugrunde, einen Schließring der eingangs genannten Art anzugeben, mit dem auf einfache und wenig aufwendige Weise eine sehr effektive und funktionssichere Abdichtung des Ringspaltes zwischen Ofen und Kaminhaube ohne Verwendung eines Sperrmediums möglich ist.

Zur Lösung dieses technischen Problems lehrt die Erfindung einen Schließring zwischen einem Ofen, insbesondere einem Konverter, und einer mit Abstand über diesem angeordneten Kaminhaube,
wobei der Oberrand des Schließringes einen Abstand von der Kaminhaube aufweist und mit der Kaminhaube einen Ringspalt bildet,
wobei über den Umfang des Schließringes verteilte und an den Schließring angeschlossene Dichtelemente vorgesehen sind,
wobei ein Dichtelement einen Aufnahmekasten und in dem Aufnahmekasten aufgenommenes Dichtmaterial aufweist,
wobei das in einem Aufnahmekasten aufgenommene Dichtmaterial aus einer Vielzahl von temperaturbeständigen Dichtteilchen besteht und wobei das Dichtmaterial an der Kaminhaube anliegt und gegen die Kaminhaube gedrückt wird. - Temperaturbeständige Dichtteilchen meint im Rahmen der Erfindung insbesondere, dass die Dichtteilchen bei Temperaturen über 500 °C, vorzugsweise bei Temperaturen oberhalb 1000 °C beständig sind und vor allem nicht schmelzen oder sich zersetzen.

Der Aufnahmekasten bildet eine erfindungsgemäße Abdeckung des Dichtmaterials. Nach sehr bevorzugter Ausführungsform der Erfindung weist der Aufnahmekasten zumindest eine oberseitige Begrenzungswand und zumindest eine rückseitige Begrenzungswand auf. Zweckmäßigerweise weist der Aufnahmekasten fernerhin kaminhaubenseitig eine Öffnung für das an der Kaminhaube anliegende Dichtmaterial auf. Oberseitige Begrenzungswand meint im Rahmen der Erfindung eine oberhalb des Ringspaltes und oberhalb der Dichtteilchen angeordnete Begrenzungswand. Rückseitige Begrenzungswand meint im Rahmen der Erfindung eine Begrenzungswand, die auf der der Kaminhaube abgewandten Seite des Dichtmaterials angeordnet ist. Die Begrenzungswände des Aufnahmekastens bzw. zumindest die oberseitige und die rückseitige Begrenzungswand bestehen vorzugsweise aus einem Metallblech, welches Metallblech außenseitig zweckmäßigerweise eine Abdeckung aus einem Feuerfestmaterial aufweist. Das Feuerfestmaterial soll die Metallbleche vor der Einwirkung all zu hoher Temperaturen schützen. Zweckmäßigerweise wird das Metallblech bzw. werden die Metallbleche von einem Feuerfest-Mauerwerk oder von feuerfestem Beton abgedeckt. Es liegt im Rahmen der Erfindung, eine feuerfeste Stampfmasse als Abdeckung für die Metallbleche vorzusehen.

Zweckmäßigerweise ist der Aufnahmekasten für das Dichtmaterial im oberen Bereich des Schließringes an dem Schließring befestigt. Oberer Bereich meint hier vor allem das obere Viertel des Schließringes. Vorzugsweise weist der Aufnahmekasten zumindest eine Befestigungsausnehmung auf und der Aufnahmekasten wird bevorzugt mit seiner Befestigungsausnehmung an einem Befestigungselement eingehängt. Der Aufnahmekasten drückt zweckmäßigerweise das Dichtmaterial bzw. die Dichtteilchen an die Kaminhaube an.

Nach bevorzugter Ausführungsform ist am Oberrand des Schließringes zumindest eine Abschlussplatte angeschlossen, welche Abschlussplatte mit Abstand zur Kaminhaube angeordnet ist. Zweckmäßigerweise liegt das Dichtmaterial auf der Abschlussplatte auf. Die Abschlussplatte ist vorzugsweise als Metallplatte ausgebildet und diese Abschlussplatte ist bevorzugt horizontal angeordnet. Es liegt im Rahmen der Erfindung, dass die Abschlussplatte an einem oberen Kühlring des Schließringes befestigt, vorzugsweise angeschweißt ist. Die Abschlussplatte sorgt einerseits dafür, dass der Ringspalt zwischen Schließring und Kaminhaube nur relativ schmal ist. Andererseits übernimmt die Abschlussplatte vorzugsweise auch die Aufgabe eines unteren Abschlusses des Aufnahmekastens bzw. eines unteren Abschlusses für das aufliegende Dichtmaterial.

Nach sehr bevorzugter Ausführungsform, der im Rahmen der Erfindung ganz besondere Bedeutung zukommt, handelt es sich bei den temperaturbeständigen Dichtteilchen um temperaturbeständige Fasern oder Fäden. Grundsätzlich können die temperaturbeständigen Dichteilchen auch Pellets oder Körner sein. Zweckmäßigerweise handelt es sich aber stets um eine Mehrzahl bzw. Vielzahl von temperaturbeständigen Dichtteilchen, so dass die Form der Gesamtheit von Dichtteilchen veränderbar bzw. einfach veränderbar ist.

Nach besonders bevorzugter Ausführungsform der Erfindung sind die temperaturbeständigen Dichtteilchen Mineralfasern. Dabei liegt es im Rahmen der Erfindung, dass künstliche Mineralfasern eingesetzt werden. Künstliche Mineralfasern sind glasige (amorphe) oder kristalline Fasern aus geschmolzenen mineralischen Rohstoffen. Nach einer sehr bevorzugten Ausführungsform wird Isolierwolle als erfindungsgemäßes Dichtmaterial eingesetzt. Die erfindungsgemäßen Dichtteilchen sind dann die Fasern bzw. Fäden der Wolle. Es liegt im Rahmen der Erfindung, dass zumindest ein Dichtmaterial aus der Gruppe "Glaswolle, Steinwolle, Schlackenwolle" verwendet wird. Als temperaturbeständige Mineralfasern können keramische Fasern (Keramikfasern) und/oder Glasfasern eingesetzt werden. Nach einer sehr bevorzugten Ausführungsform der Erfindung wird temperaturbeständige Isolierwolle als Dichtmaterial verwendet, die über 50 Gew.-%, vorzugsweise über 60 Gew.-% Silicium-Sauerstoff-Verbindungen enthält und die Erdalkaliverbindungen enthält. Nach sehr bevorzugter Ausführungsform enthält die verwendete Isolierwolle Sauerstoffverbindungen des Calciums und/oder des Magnesiums.

Vorzugsweise werden die temperaturbeständigen Dichtteilchen mit der Maßgabe in den Aufnahmekasten eingebracht und wird der Aufnahmekasten mit der Maßgabe angeordnet und befestigt, dass die Dichtteilchen gegen die Kaminhaube gedrückt werden. Die Dichtteilchen werden dann also mit vorgegebener Andruckkraft gegen die Kaminhaube gedrückt. Zweckmäßigerweise liegen die Dichtteilchen gleichsam unter Vorspannung an der Kaminhaube an. Hierzu wird das Dichtmaterial bevorzugt in den Aufnahmekasten entsprechend eingedrückt bzw. eingequetscht.

Der Erfindung liegt die Erkenntnis zugrunde, dass mit der erfindungsgemäßen Lehre eine einfache, aber nichtsdestoweniger effektive Abdichtung des Ringspaltes zwischen einem Ofen und einer Kaminhaube erreicht wird. Die Abdichtungsmaßnahmen mit dem erfindungsgemäßen Dichtmaterial haben sich ganz besonders bewährt. Bei sehr effektiver und funktionssicherer Dichtwirkung bleibt auch eine weitgehende Verschleißminimierung der Bauteile gewährleistet. Vor allem nachteilhafte Beschädigungen des Schließringes und/oder der Kaminhaube stellen sich nicht ein.

Nachfolgend wird die Erfindung anhand einer lediglich ein Ausführungsbeispiel darstellenden Zeichnung näher erläutert. Es zeigen in schematischer Darstellung
- Fig. 1: einen Längsschnitt durch eine Hälfte eines Schließringes zwischen einem Konverter und einer Kaminhaube und
- Fig. 2: eine Draufsicht auf den Gegenstand nach Fig. 1.

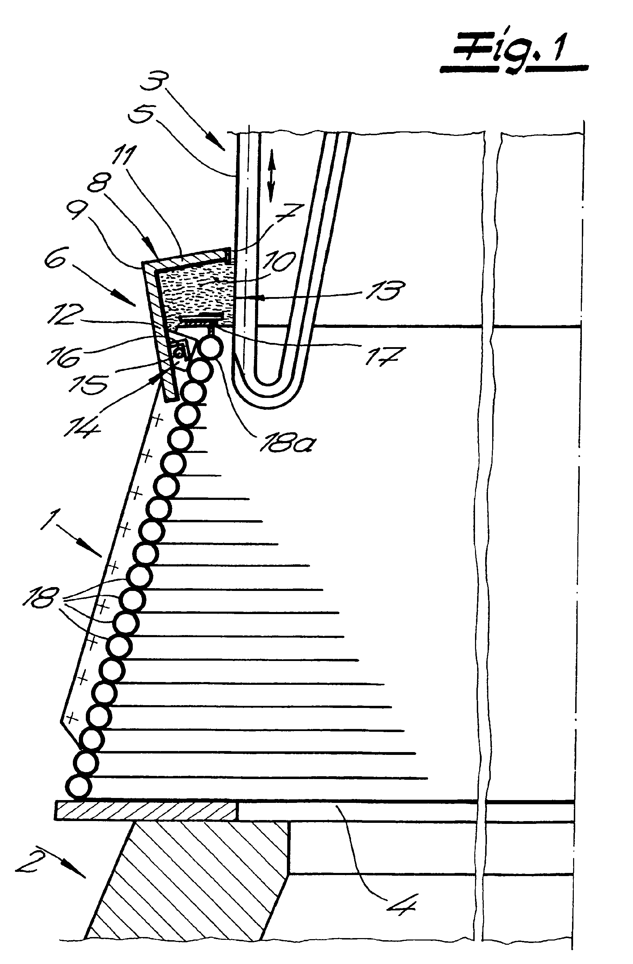

Ein erfindungsgemäßer Schließring 1 ist im Ausführungsbeispiel nach Fig. 1 zwischen einem Konverter 2 und einer Kaminhaube 3 angeordnet, welche Kaminhabe 3 sich mit Abstand über dem Konvertermund 4 befindet. Die Kaminhaube 3 geht an ihrem oberen Ende in einen nicht dargestellten Konverterkamin über. Im Ausführungsbeispiel weist die Kaminhaube 3 an ihrem unteren Ende einen konischen Abschnitt auf, über welchen sie in ein nach oben gerichtetes zylindrisches Teil 5 übergeht. Der erfindungsgemäße Schließring 1 ist mit Hilfe einer nicht dargestellten Betätigungsanordnung heb- und senkbar und somit höhenverstellbar. In dem in den Figuren dargestellten Zustand befindet sich der Schließring 1 in abgesenkter Stellung und ist mit seinem Unterrand auf dem Konvertermund 4 abgestützt. Der Oberrand 6 des Schließringes 1 weist einen Abstand von der Kaminhaube 3 auf und bildet mit dieser Kaminhaube 3 bzw. mit deren zylindrischen Teil 5 einen Ringspalt 7.

Erfindungsgemäß sind über den Umfang des Schließringes 1 verteilte und an den Schließring 1 angeschlossene Dichtelemente 8 vorgesehen. Ein Dichtelement 8 weist einen Aufnahmekasten 9 und in dem Aufnahmekasten 9 aufgenommenes Dichtmaterial 10 auf. Dieses Dichtmaterial 10 besteht aus einer Vielzahl von temperaturbeständigen Dichtteilchen.

Vorzugsweise und im Ausführungsbeispiel handelt es sich bei dem Dichtmaterial 10 um künstliche Mineralfasern, insbesondere um Isolierwolle. Das Dichtmaterial 10 liegt an der Kaminhaube 3 bzw. im Ausführungsbeispiel an dem zylindrischen Teil 5 der Kaminhaube 3 an. Zweckmäßigerweise wird das Dichtmaterial 10 gleichsam in den Aufnahmekasten 9 eingedrückt bzw. eingequetscht, so dass das Dichtmaterial 10 an die Kaminhaube 3 bzw. an den zylindrischen Teil 5 angedrückt wird bzw. gleichsam unter Vorspannung an der Kaminhaube 3 bzw. an dem zylindrischen Teil 5 anliegt.

Vorzugsweise und im Ausführungsbeispiel weist der Aufnahmekasten 9 eine oberseitige Begrenzungswand 11 und eine rückseitige Begrenzungswand 12 auf. Der Aufnahmekasten 9 weist fernerhin kaminhaubenseitig eine Öffnung 13 für das an der Kaminhaube 3 anliegende bzw. angedrückte Dichtmaterial 10 auf. Vorzugsweise und im Ausführungsbeispiel ist der Aufnahmekasten 9 im oberen Bereich des Schließringes 1 an dem Schließring 1 befestigt. Zweckmäßigerweise weist der Aufnahmekasten 9 zumindest eine Befestigungsausnehmung 14 auf und wird der Aufnahmekasten 9 mit dieser Befestigungsausnehmung 14 an einem Befestigungselement 15 eingehängt. Das Befestigungselement 15 hat im Ausführungsbeispiel (Fig. 1) die Form eines horizontalen Befestigungsbolzens bzw. einer horizontalen Befestigungsstange. Die Befestigungsausnehmung 14 wird im Ausführungsbeispiel durch ein an der rückseitigen Begrenzungswand 12 angeschlossenes Winkelelement 16 verwirklicht.

In Fig. 1 ist erkennbar, dass der Schließring 1 vorzugsweise und im Ausführungsbeispiel aus übereinander angeordneten ringförmigen Kühlrohren 18 besteht, die von einem Kühlmedium durchströmt werden. Nach bevorzugter Ausführungsform der Erfindung ist am Oberrand des Schließringes 1 eine Abschlussplatte 17 angeschlossen, die zweckmäßigerweise als Metallplatte ausgebildet ist und bevorzugt an dem oberen Kühlrohr 18a angeschweißt ist. Die Abschlussplatte 17 ist mit Abstand zur Kaminhaube 3 angeordnet. Nach sehr bevorzugter Ausführungsform und im Ausführungsbeispiel bildet die Abschlussplatte 17 eine untere Begrenzungswand für das im Aufnahmekasten 9 aufgenommene Dichtmaterial 10.

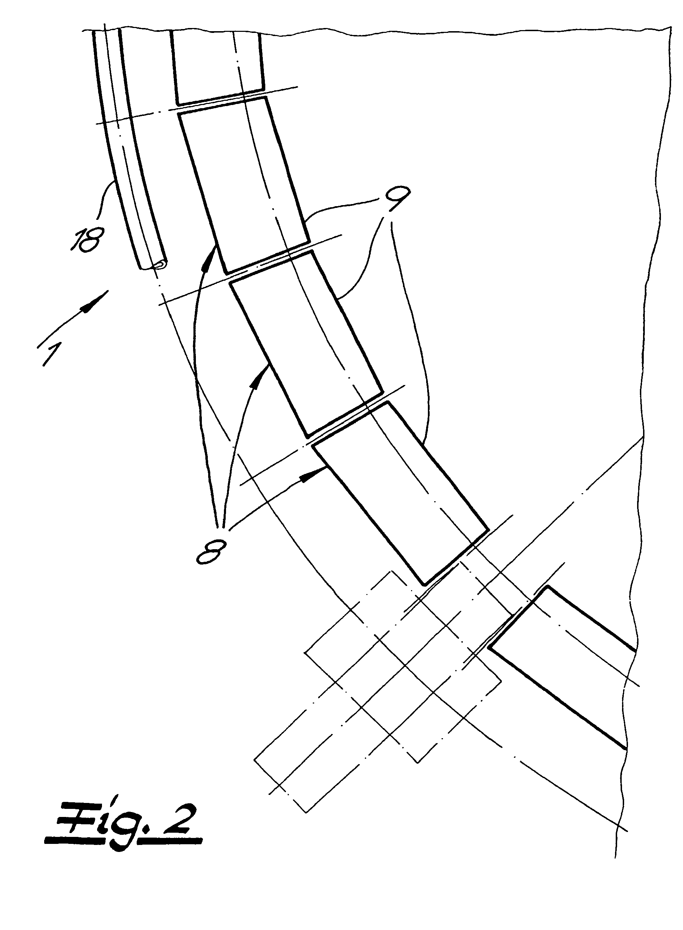

In der Fig. 2 ist schematisch veranschaulicht worden, dass eine Mehrzahl von Dichtelementen 8 über den Umfang des Schließringes 1 bzw. über den Umfang der Kaminhaube 3 verteilt sind. Mit diesen erfindungsgemäßen Dichtelementen 8 kann eine sehr wirksame Abdichtung des Ringspaltes 7 erreicht werden. Die aus dem Stand der Technik bekannten aufwendigen Maßnahmen und insbesondere die Zuführung eines fluiden Sperrmediums sind nicht mehr erforderlich.

## Patentansprüche

1. Schließring (1) zwischen einem Ofen, insbesondere einem Konverter (2), und einer mit Abstand über diesem angeordneten Kaminhaube (3),
wobei der Oberrand (6) des Schließringes (1) einen Abstand von der Kaminhaube (3) aufweist und mit der Kaminhaube (3) einen Ringspalt (7) bildet,
wobei über den Umfang des Schließringes (1) verteilte und an den Schließring (1) angeschlossene Dichtelemente (8) vorgesehen sind,
wobei ein Dichtelement (8) einen Aufnahmekasten (9) und in dem Aufnahmekasten (9) aufgenommenes Dichtmaterial (10) aufweist,
wobei das in einem Aufnahmekasten (9) aufgenommene Dichtmaterial (10) aus einer Vielzahl von temperaturbeständigen Dichtteilchen besteht und wobei das Dichtmaterial (10) an der Kaminhaube (3) anliegt und gegen die Kaminhaube (3) gedrückt wird.

2. Schließring nach Anspruch 1, wobei der Aufnahmekasten (9) zumindest eine oberseitige Begrenzungswand (11) und eine rückseitige Begrenzungswand (12) und kaminhaubenseitig eine Öffnung (13) für das an der Kaminhaube (3) anliegende Dichtmaterial (10) aufweist.

3. Schließring nach einem der Ansprüche 1 oder 2, wobei der Aufnahmekasten (9) im oberen Bereich des Schließringes (1) an dem Schließring (1) befestigt ist.

4. Schließring nach einem der Ansprüche 1 bis 3, wobei am Oberrand des Schließringes (1) zumindest eine Abschlussplatte (17) angeschlossen ist, welche Abschlussplatte (17) mit Abstand zur Kaminhaube (3) angeordnet ist und wobei das Dichtmaterial (10) oberhalb der Abschlussplatte (17) angeordnet ist.

5. Schließring nach einem der Ansprüche 1 bis 4, wobei es sich bei den temperaturbeständigen Dichtteilchen um temperaturbeständige Fasern oder Fäden handelt.

6. Schließring nach Anspruch 5, wobei die temperaturbeständigen Dichtteilchen Mineralfasern sind.

7. Schließring nach einem der Ansprüche 1 bis 6, wobei als Dichtmaterial (10) Isolierwolle eingesetzt wird.

8. Schließring nach einem der Ansprüche 1 bis 7, wobei die temperaturbeständigen Dichtteilchen mit der Maßgabe in den Aufnahmekasten (9) eingebracht werden und wobei der Aufnahmekasten (9) mit der Maßgabe angeordnet und befestigt wird, dass die Dichtteilchen gegen die Kaminhaube (3) gedrückt werden.

## Claims

1. Locking ring (1) between an oven, particularly a converter (2), and a chimney hood (3) mounted at a distance above it,
wherein the upper edge (6) of the locking ring (1) features a distance from the chimney hood (3) and forms a ring gap (7) with the chimney hood (3),
wherein the sealing elements (8) are distributed over the circumference of the locking ring (1) and connected to the locking ring (1),
wherein a sealing element (8) features a receiving box (9) with a received sealing material (10) within the receiving box (9),
wherein the sealing material received in a receiving box (9) comprises a multiple of temperature resistant sealing particles and wherein the sealing material (10) lies on the chimney hood (3) and presses against the chimney hood (3).

2. Locking ring according to claim 1, wherein the receiving box (9) features at least a boundary wall (11) on the top side and a boundary wall (12) on the rear side and an opening (13) on the chimney side for the sealing material (10) that lies on the chimney hood (3).

3. Locking ring according to one of claims 1 or 2, whereby the receiving box (9) is fastened on the locking ring (1) in the upper area of the locking ring (1).

4. Locking ring according to one of claims 1 to 3, wherein on the upper edge of the locking ring (1) at least a sealing plate (17) is connected, the sealing plate (17) is located with a gap from the chimney (3) and wherein the sealing material (10) is located above the sealing plate (17).

5. Locking ring according to one of claims 1 to 4, wherein the temperature-resistant sealing particles consist of temperature resistant fibres or threads.

6. Locking ring according to claim 5, wherein the temperature resistant sealing particles are mineral fibres.

7. Locking ring according to one of claims 1 to 6, wherein insulating wool is used as sealing material (10).

8. Locking ring according to one of claims 1 to 7, wherein the temperature-resistant sealing particles are brought into the receiving box and wherein the receiving box (9) is located and fastened provided that the sealing particles are pressed against the chimney hood (3).

## Revendications

1. Anneau de fermeture (1) disposé entre un four, notamment un convertisseur (2), et une hotte de cheminée (3) disposée à distance par-dessus ce convertisseur.
le bord supérieur (6) de l'anneau de fermeture (1) présentant un écart par rapport à la hotte de cheminée (3) et formant une fente annulaire (7) avec la hotte de cheminée (3),
des éléments d'étanchéité (8) répartis sur la circonférence de l'anneau de fermeture (1) et raccordés à l'anneau de fermeture (1) étant prévus,
un élément d'étanchéité (8) présentant une caisse de réception (9) et du matériau d'étanchéité (10) logé dans la caisse de réception (9),
le matériau d'étanchéité (10) logé dans une caisse de réception (9) étant constitué d'une pluralité de petites pièces d'étanchéité résistantes à la température et le matériau d'étanchéité (10) étant adjacent à la hotte de cheminée (3) et pressé contre la hotte de cheminée (3).

2. Anneau de fermeture selon la revendication 1, la caisse de réception (9) présentant au moins une paroi de limitation (11) sur le côté supérieur et une paroi de limitation (12) sur le côté arrière et une ouverture (13), du côté de la hotte de cheminée, pour le matériau d'étanchéité (10) adjacent à la hotte de cheminée (3).

3. Anneau de fermeture selon l'une quelconque des revendications 1 ou 2, la caisse de réception (9) étant fixée sur l'anneau de fermeture (1) dans la partie supérieure de l'anneau de fermeture (1).

4. Anneau de fermeture selon l'une quelconque des revendications 1 à 3, au moins une plaque terminale (17) étant raccordée au bord supérieur de l'anneau de fermeture (1), laquelle plaque terminale (17) est disposée à écart de la hotte de cheminée (3) et le matériau d'étanchéité (10) étant disposé au-dessus de la plaque terminale (17).

5. Anneau de fermeture selon l'une quelconque des revendications 1 à 4, les petites pièces d'étanchéité résistantes à la température étant des fibres ou des fils résistants à la température.

6. Anneau de fermeture selon la revendication 5, les petites pièces d'étanchéité résistantes à la température étant des fibres minérales.

7. Anneau de fermeture selon l'une quelconque des revendications 1 à 6, de la laine isolante étant utilisée comme matériau d'étanchéité (10).

8. Anneau de fermeture selon l'une quelconque des revendications 1 à 7, les petites pièces d'étanchéité résistantes à la température étant placées de telle manière dans la caisse de réception (9) et la caisse de réception (9) étant disposée et fixée de telle manière que les petites pièces d'étanchéité sont pressées contre la hotte de cheminée (3).
